# EUROPÄISCHE PATENTANMELDUNG

(11) **EP 1 400 335 A1**
(43) Veröffentlichungstag der Anmeldung: **24.03.2004**
(21) Anmeldenummer: 02020796.5
(22) Anmeldetag: 17.09.2002
(51) Int. Cl.: B29C 47/08, F16L 27/08

(54) **Anschlussrohrstück, inbesondere Extruderanschlussrohrstück**

(71) Anmelder: Reifenhäuser GmbH & Co. Maschinenfabrik, 53839 Troisdorf (DE)
(72) Erfinder: Meyer, Helmut, 53842 Troisdorf (DE)
(74) Vertreter: Rohmann, Michael, Dr.

(57) **Zusammenfassung**

Anschlussrohrstück (3), insbesondere Extruderanschlussrohrstück zur Durchleitung einer Schmelze von einem Extruder zu einer weiteren Anlagenkomponente, wobei zumindest ein Mittelrohrteil (6) sowie ein an ein erstes Ende des Mittelrohrteils angeschlossenes erstes Endrohrteil (7) und ein an dem gegenüberliegenden zweiten Ende des Mittelrohrteils angeschlossenes zweites Endrohrteil (8) vorgesehen ist. Das erste Endrohrteil (7) und das zweite Endrohrteil (8) ist jeweils mit einer Anschlussfläche (9,14) an eine Komplementäranschlussfläche (10,15) des Mittelrohrteils (6) angeschlossen, wobei die Anschlussflächen (9,14) und die Komplementäranschlussflächen (10,15) schräg zu den Längsachsen (11,16) der Endrohrteile (7,8) und zur Längsachse (12) des Mittelrohrteils (6) orientiert sind. Jedes Endrohrteil (7,8) und das Mittelrohrteil (6) sind um eine senkrecht zur jeweiligen Anschlussfläche (9,14) und senkrecht zur jeweils zugeordneten Komplementäranschlussfläche (6,15) angeordneten Drehachse gegeneinander verdrehbar.

## Beschreibung

Die Erfindung betrifft ein Anschlussrohrstück, insbesondere Extruderanschlussrohrstück zur Durchleitung einer Schmelze von einem Extruder zu einer weiteren Anlagenkomponente. Bei der weiteren Anlagenkomponente handelt es sich insbesondere um einen Adapter, zu dem die aus dem Extruder austretende Schmelze geführt wird. Dem Adapter ist zweckmäßigerweise ein Breitschlitzwerkzeug nachgeschaltet. Ein Extruderanschlussrohrstück muss so ausgebildet sein, dass die Schmelze möglichst auf dem kürzesten Weg zu der weiteren Anlagenkomponente bzw. zu dem Adapter geführt werden kann.

Aus der Praxis ist es bekannt, ein starres Extruderanschlussrohrstück für den jeweiligen Schmelzeführungsbereich anzufertigen. Dazu sind in der Regel aufwendige Schweiß- und Fräsmaßnahmen erforderlich. Nachteilhaft ist, dass für jede Anschlusssituation ein spezielles Anschlussrohrstück in aufwendiger Weise gefertigt bzw. angepasst werden muss. Weiterhin ist es sehr nachteilhaft, dass die bekannten Extruderanschlussrohrstücke keinerlei Toleranzausgleich zulassen. Bereits nach geringen Veränderungen und Verschiebungen von Anlagenkomponenten passt das Anschlussrohrstück normalerweise nicht mehr und muss ersetzt werden oder in aufwendiger Weise an die neue Situation angepasst werden. Dass alles bedingt einen hohen Arbeits- und Kostenaufwand.

Demgegenüber liegt der Erfindung das technische Problem zugrunde, ein Anschlussrohrstück, insbesondere Extruderanschlussrohrstück anzugeben, mit dem alle möglichen Toleranzen funktionssicher und vor allem einfach und wenig aufwendig ausgeglichen werden können.

Zur Lösung dieses technischen Problems lehrt die Erfindung ein Anschlussrohrstück, insbesondere Extruderanschlussrohrstück zur Durchleitung einer Schmelze von einem Extruder zu einer weiteren Anlagenkomponente,
wobei zumindest ein Mittelrohrteil sowie ein an ein erstes Ende des Mittelrohrteils angeschlossenes erstes Endrohrteil und ein an dem gegenüberliegenden zweiten Ende des Mittelrohrteils angeschlossenes zweites Endrohrteil vorgesehen ist,
wobei das erste Endrohrteil und das zweite Endrohrteil jeweils mit einer Anschlussfläche an eine Komplementäranschlussfläche des Mittelrohrteils angeschlossen sind, wobei die Anschlussflächen und die Komplementäranschlussflächen schräg zu den Längsachsen der Endrohrteile und zur Längsachse des Mittelrohrteils orientiert sind,
und wobei jedes Endrohrteil und das Mittelrohrteil um eine senkrecht zur jeweiligen Anschlussfläche und senkrecht zur jeweils zugeordneten Komplementäranschlussfläche angeordneten Drehachse gegeneinander verdrehbar sind.

Wenngleich die Erfindung auch ganz allgemein ein Anschlussrohrstück betrifft, wird nachfolgend die bevorzugte Ausführungsform, nämlich das Extruderanschlussrohrstück genannt. Mit dem nachfolgend benutzten Begriff "Extruderanschlussrohrstück" ist aber auch ganz allgemein ein "Anschlussrohrstück" gemeint. Nach sehr bevorzugter Ausführungsform, der im Rahmen der Erfindung ganz besondere Bedeutung zukommt, besteht das erfindungsgemäße Extruderanschlussrohrstück aus drei Teilen, nämlich einem Mittelrohrteil, einem ersten und einem zweiten Endrohrteil. Es liegt im Rahmen der Erfindung, dass die Endrohrteile und das Mittelrohrteil stufenlos zueinander verdrehbar sind. - Ein Endrohrteil ist mit seiner Anschlussfläche auf die zugeordnete Komplementäranschlussfläche des Mittelrohrteils aufgesetzt und die Anschlussfläche ist relativ zur Komplementäranschlussfläche verdrehbar bzw. die Komplementäranschlussfläche ist relativ zur Anschlussfläche verdrehbar. Es versteht sich, dass der Verbindungsbereich zwischen Anschlussfläche und Komplementäranschlussfläche für den Anwendungszweck ausreichend dicht eingerichtet ist und dass insoweit geeignete Dichtmaßnahmen getroffen bzw. geeignete Dichtelemente vorgesehen sind. Es liegt im Rahmen der Erfindung, dass ein Endrohrteil, beispielsweise das erste Endrohrteil zum Anschluss an einen Extruder vorgesehen ist. Das andere zweite Endrohrteil wird dann zweckmäßigerweise an einen Adapter angeschlossen, dem ein Breitschlitzwerkzeug nachgeschaltet ist und das Extruderanschlussrohrstück bildet auf diese Weise ein Verbindungselement im Schmelzeführungsbereich zwischen Extruder und Adapter.

Nach sehr bevorzugter Ausführungsform, der im Rahmen der Erfindung ganz besondere Bedeutung zukommt, weist ein Endrohrteil an der Anschlussfläche einen kreisförmigen Innenquerschnitt auf und weist das Mittelrohrteil an der zugeordneten Komplementäranschlussfläche ebenfalls einen kreisförmigen Innenquerschnitt auf. Die Schmelze wird also zweckmäßigerweise im Verbindungsbereich zwischen Anschlussfläche und Komplementäranschlussfläche durch einen Leitungsabschnitt mit einem kreisförmigen Innenquerschnitt bzw. mit einem zylinderförmigen Innenraum geleitet. Diese Ausführungsform hat sich im Hinblick auf eine funktionssichere und zwanglose Verdrehbarkeit der Rohrteile besonders bewährt. Dabei werden nämlich nachteilhafte Ellipsenquerschnitte im Verbindungsbereich vermieden, die zwangsläufig entstehen, wenn eine Schrägfläche am Stirnende eines Rohrstückes mit kreisförmigem Innenquerschnitt eingerichtet wird.

Vorzugsweise ist an einem Endrohrteil ein mit der Anschlussfläche ausgestattetes Anschlusselement vorgesehen, welches Anschlusselement einen zylinderförmigen Innenraum aufweist, wobei die Zylinderlängsachse dieses Innenraumes senkrecht zu der Anschlussfläche angeordnet ist. Zylinderförmiger Innenraum meint einen Innenraum mit kreisförmigem Querschnitt. Das mittelrohrteilseitige Anschlusselement weist zweckmäßigerweise einen Anschlussflansch auf, an dem die Anschlussfläche vorgesehen ist. Es liegt im Rahmen der Erfindung, dass an dem Mittelrohrteil ein mit einer Komplementäranschlussfläche ausgestattetes Komplementäranschlusselement vorgesehen ist, welches Komplementäranschlusselement ebenfalls einen zylinderförmigen Innenraum aufweist, wobei die Zylinderlängsachse dieses Innenraumes senkrecht zu der Komplementäranschlussfläche angeordnet ist. Zweckmäßigerweise ist an beiden Stirnseiten bzw. an beiden Anschlussseiten des Mittelrohrteils ein solches Komplementäranschlusselement vorgesehen.

Nach sehr bevorzugter Ausführungsform der Erfindung bildet die schräge Anschlussfläche eines Endrohrteils mit der Längsachse dieses Endrohrteils einen Winkel α von 10° bis 60°, vorzugsweise von 10° bis 55°. Der Winkel α liegt bevorzugt zwischen 15° und 50°. Der Winkel α kann beispielsweise Werte von 15°, von 30° oder von 45° annehmen. Eine bevorzugte Ausführungsform der Erfindung ist dadurch gekennzeichnet, dass die Anschlussfläche einen Winkel α = 45° mit der Längsachse des Endrohrteils bildet. Vorzugsweise liegt der Winkel α im Bereich zwischen 15° und 55°, bevorzugt zwischen 40° und 50°. Es liegt im Rahmen der Erfindung, dass die zugeordnete, zu der betreffenden Anschlussfläche senkrechte Drehachse mit der Längsachse des betreffenden Endrohrteils einen Winkel α mit den vorgenannten Werten bildet.

Es liegt fernerhin im Rahmen der Erfindung, dass eine Komplementäranschlussfläche des Mittelrohrteils mit der Längsachse dieses Mittelrohrteils einen Winkel β von 10° bis 60°, vorzugsweise von 10° bis 55° bildet. Der Winkel β liegt zweckmäßigerweise im Bereich zwischen 15° und 50°. Der Winkel β kann zum Beispiel Werte von 15°, 30° oder 45°annehmen. Bei der letztgenannten Ausführungsform (β = 45°) handelt es sich um eine bevorzugte Ausführungsform. Vorzugsweise liegt der Winkel β im Bereich zwischen 35° und 55°, bevorzugt zwischen 40° und 50°. Es liegt im Rahmen der Erfindung, dass der oben genannte Winkel α den gleichen Wert hat wie der Winkel β.

Zweckmäßigerweise ist ein linearer Zustand des erfindungsgemäßen Extruderanschlussrohrstückes erzeugbar, in dem die Längsachsen der Endrohrteile und die Längsachse des Mittelrohrteils parallel zueinander angeordnet sind. Dieser lineare Zustand kann durch entsprechendes Verdrehen der Endrohrteile bzw. des Mittelrohrteiles erzeugt werden. Vorzugsweise liegen in dem linearen Zustand des Extruderanschlussrohrstückes die Längsachsen der Endrohrteile auf einer Geraden. Durch Verdrehen von Endrohrteilen bzw. Mittelrohrteil kann ein erster gewinkelter Zustand des Extruderanschlussrohrstückes hergestellt werden, in dem eine Längsachse eines Endrohteils senkrecht zur Längsachse des Mittelrohrteils angeordnet ist. Durch Verdrehen von Endrohrteilen bzw. Mittelrohrteil kann zweckmäßigerweise ein zweiter gewinkelter Zustand des Extruderanschlussrohrstückes hergestellt werden, in dem die Längsachsen der beiden Endrohrteile parallel zueinander und senkrecht zur Längsachse des Mittelrohrteils angeordnet sind.

Der Erfindung liegt die Erkenntnis zugrunde, dass es sich bei dem erfindungsgemäßen Anschlussrohrstück um ein Rohrleitungsgelenk handelt, das einfach, flexibel und variabel an alle möglichen Anschlussgegebenheiten anpassbar ist. Das Anschlussrohrstück eignet sich insbesondere als Extruderanschlussrohrstück im Schmelzeführungsbereich hinter einem Extruder. Mit einem erfindungsgemäßen Extruderanschlussrohrstück können einfach und problemlos alle möglichen Toleranzen bzw. sämtliche Achs- und Winkelverlagerungen im Schmelzeführungsbereich ausgeglichen werden. Bei Veränderungen bzw. Verschiebungen in der Anlage kann das Extruderanschlussrohrstück auf einfache und wenig aufwendige Weise zügig an die veränderte Anschlusssituation angepasst werden. Nichtsdestoweniger ist eine ungestörte und funktionssichere Schmelzeführung möglich. Im Vergleich zu den sehr aufwendigen aus dem Stand der Technik bekannten Maßnahmen bringt das erfindungsgemäße Extruderanschlussrohrstück beachtliche Vorteile mit sich. Hervorzuheben ist auch, dass das erfindungsgemäße Extruderanschlussrohrstück auf einfache und wenig aufwendige Weise hergestellt werden kann und das bereits bestehende Anlagen problemlos mit einem solchen Extruderanschlussrohrstück nachgerüstet werden können.

Nachfolgend wird die Erfindung anhand einer lediglich ein Ausführungsbeispiel darstellenden Zeichnung näher erläutert. Es zeigen in schematischer Darstellung:
- Fig. 1: eine Seitenansicht einer Vorrichtung nach dem Stand der Technik,
- Fig. 2: ein erster Zustand eines erfindungsgemäßen Extruderanschlussrohrstückes,
- Fig. 3: den Gegenstand nach Fig. 2 in einem zweiten Funktionszustand und
- Fig. 4: ein Schnitt A-A durch den Gegenstand nach Fig. 3.

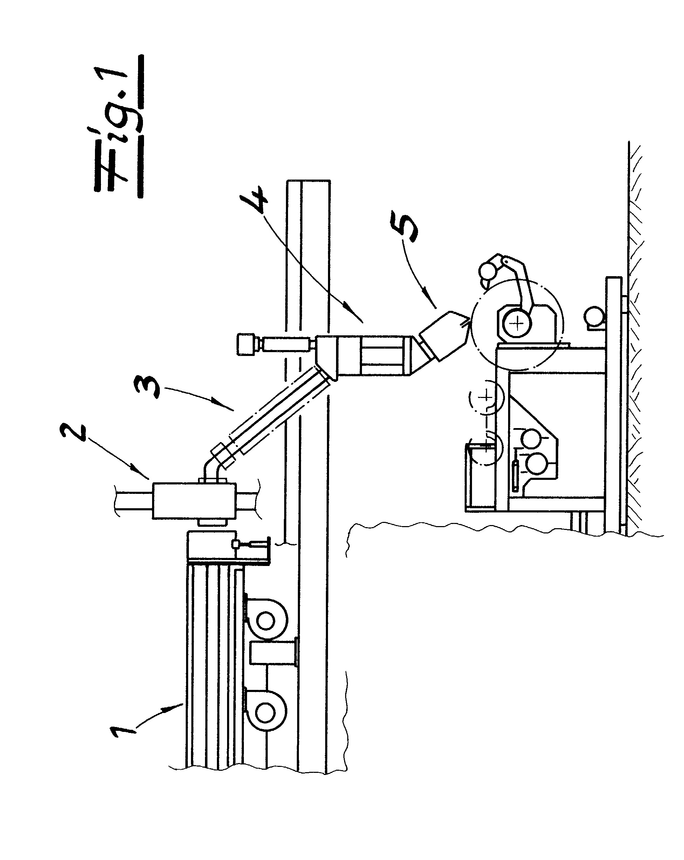

Fig. 1 zeigt eine Anlage mit einem Extruder 1 mit Siebwechsler 2 und einem Extruderanschlussrohrstück 3, das den Extruder 1 mit einem Adapter 4 verbindet. Dem Adapter 4 ist im Ausführungsbeispiel ein Breitschlitzwerkzeug 5 nachgeschaltet. Bei der in Fig. 1 dargestellten, aus dem Stand der Technik bekannten Vorrichtung ist ein starres Extruderanschlussrohrstück 3 vorgesehen, das nur durch aufwendige Schweißarbeiten und Fräsarbeiten hergestellt und an die Anschlussgegebenheiten angepasst werden kann.

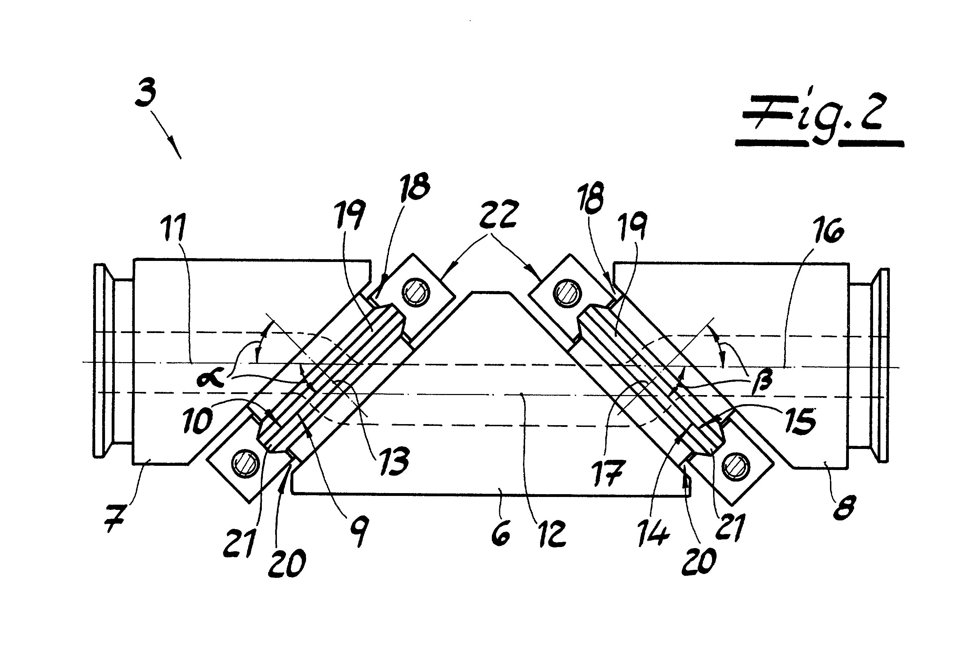

Die Fig. 2 bis 4 zeigen dagegen ein erfindungsgemäßes Extruderanschlussrohrstück 3 zur Durchführung einer Schmelze von einem Extruder 1 zu einer weiteren Anlagenkomponente. Vorzugsweise und im Ausführungsbeispiel ist ein Mittelrohrteil 6 vorgesehen sowie ein an ein erstes Ende des Mittelrohrteils 6 angeschlossenes erstes Endrohrteil 7 und ein an dem gegenüberliegenden zweiten Ende des Mittelrohrteils 6 angeschlossenes zweites Endrohrteil 8 vorgesehen.

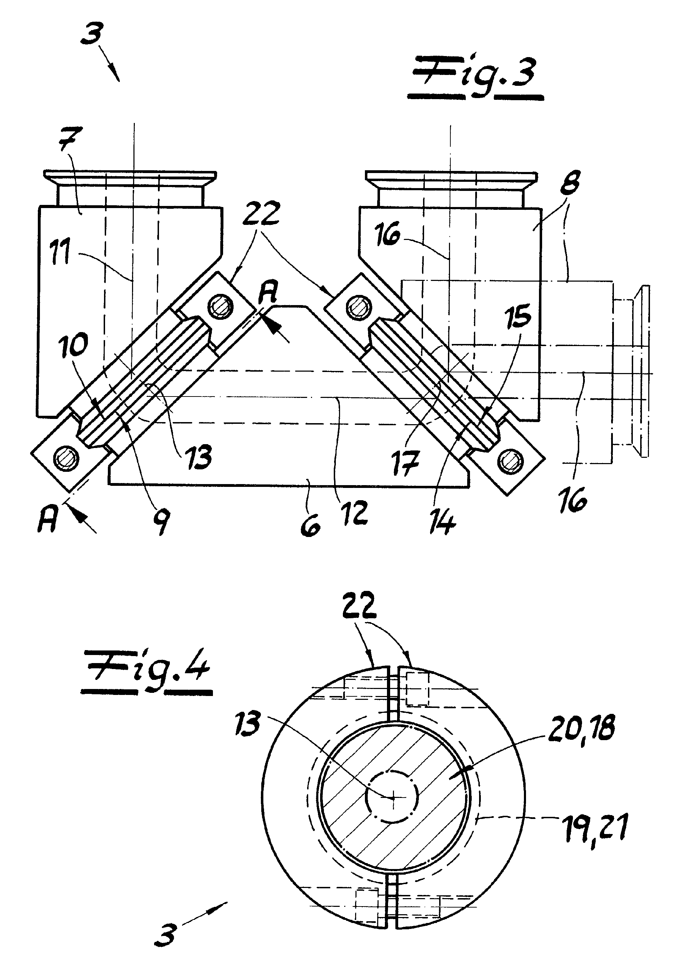

Das erste Endrohrteil 7 ist mit einer ersten Anschlussfläche 9 an eine erste Komplementäranschlussfläche 10 des Mittelrohrteils 6 angeschlossen. Die erste Anschlussfläche 9 und die erste Komplementäranschlussfläche 10 sind dabei schräg zur Längsachse 11 des ersten Endrohrteils 7 sowie schräg zur Längsachse 12 des Mittelrohrteils 6 orientiert. Anschlussfläche 9, 14 bzw. Komplementäranschlussfläche 10, 15 meint hier und nachfolgend einerseits die mit dem Mittelrohrteil 6 bzw. mit dem Endrohrteil 7, 8 in Kontakt stehende Fläche als auch in Bezug auf die geometrischen Verhältnisse, die jeweilige Ebene, in der die tatsächlich kontaktierende Anschlussfläche 9, 14 bzw. Komplementäranschlussfläche 10, 15 liegt. Das erste Endrohrteil 7 und das Mittelrohrteil 6 sind um eine senkrecht zur ersten Anschlussfläche 9 und senkrecht zur zugeordneten Komplementäranschlussfläche 10 orientierten (gedachten) Drehachse 13 gegeneinander verdrehbar. Das ergibt sich auch aus einer vergleichenden Betrachtung der Fig. 2 und 3. Erfindungsgemäß sind erstes Endrohrteil 7 und Mittelrohrteil 6 stufenlos gegeneinander verdrehbar und somit kann jeder zwischen dem Zustand in Fig. 2 und dem Zustand in Fig. 3 liegende Zwischenzustand durch entsprechende Verdrehung verwirklicht werden.

Das zweite Endrohrteil 8 ist mit einer zweiten Anschlussfläche 14 an eine zweite Komplementäranschlussfläche 15 des Mittelrohrteils 6 angeschlossen, wobei die zweite Anschlussfläche 14 und die zweite Komplementäranschlussfläche 15 schräg zur Längsachse 16 des zweiten Endrohrteils 8 und schräg zur Längsachse 12 des Mittelrohrteils 6 angeordnet sind. Das zweite Endrohrteil 8 und das Mittelrohrteil 6 sind um eine senkrecht zu der zweiten Anschlussfläche 14 und senkrecht zu der zugeordneten zweiten Komplementäranschlussfläche 15 orientierten zweiten (gedachten) Drehachse 17 stufenlos gegeneinander verdrehbar.

Ein Endrohrteil 7, 8 kann einem Extruder 1 bzw. dem Siebwechsler 2 unmittelbar nachgeschaltet sein. Es ist aber auch möglich, das erfindungsgemäße Extruderanschlussrohrstück 3 an ein bereits an den Extruder 1 angeschlossenes Rohrstück anzuschließen.

Nach sehr bevorzugter Ausführungsform, der im Rahmen der Erfindung ganz besondere Bedeutung zukommt, weist ein Endrohrteil 7, 8 an der Anschlussfläche 9, 14 einen kreisförmigen Innenquerschnitt auf und weist auch das Mittelrohrteil 6 an der zugeordneten Komplementäranschlussfläche 10, 15 ebenfalls einen kreisförmigen Innenquerschnitt auf. Dieser kreisförmige Innenquerschnitt ist insbesondere in Fig. 4 erkennbar. Mit anderen Worten hat das erfindungsgemäße Extruderanschlussrohrstück 3 in den schrägen Ebenen bzw. im Bereich der schrägen Ebenen, in denen die erste Anschlussfläche 9 und die erste Komplementäranschlussfläche 10 einerseits bzw. die zweite Anschlussfläche 14 und die zweite Komplementäranschlussfläche 15 andererseits liegen, einen kreisförmigen Innenquerschnitt. Vorzugsweise und im Ausführungsbeispiel ist an jedem Endrohrteil 7, 8 ein die jeweilige Anschlussfläche 9, 14 aufweisendes zylinderförmiges Anschlusselement 18 vorgesehen, welches zylinderförmige Anschlusselement 18 einen zylinderförmigen Innenraum aufweist. Die zugehörigen Zylinderlängsachsen, die den Drehachsen 13, 17 entsprechen, sind jeweils senkrecht zu den Anschlussflächen 9, 14 angeordnet. Zweckmäßigerweise ist ein Anschlusselement 18 mit einem Anschlussflansch 19 ausgestattet, an dem die Anschlussfläche 9, 14 vorgesehen ist. Fernerhin hat im Ausführungsbeispiel auch das Mittelrohrteil 6 an jeder Seite ein die jeweilige Komplementäranschlussfläche 10, 15 aufweisendes zylinderförmiges Komplementäranschlusselement 20, wobei auch das zylinderförmige Komplementäranschlusselement 20 einen zylinderförmigen Innenraum aufweist. Die zugehörigen Zylinderlängsachsen, die den Drehachsen 13, 17 entsprechen, sind senkrecht zu den Komplementäranschlussflächen 10, 15 angeordnet. Das Komplementäranschlusselement 20 ist mit einem Komplementäranschlussflansch 21 ausgestattet, an dem die jeweilige Komplementäranschlussfläche 10, 15 vorgesehen ist. Ein Anschlusselement 8 bildet vorzugsweise und im Ausführungsbeispiel mit dem jeweils zugeordneten Komplementäranschlusselement 20 einen Rohrleitungsabschnitt, der innen zylinderförmig ausgebildet ist bzw. durchgehend über die Länge des Rohrleitungsabschnittes einen kreisförmigen Innenquerschnitt aufweist. Im Ausführungsbeispiel entspricht im Übrigen die erste Drehachse 13 bzw. die zweite Drehachse 17 die Mittellängsachse des jeweiligen zylinderförmigen Rohrleitungsabschnittes.

Vorzugsweise und im Ausführungsbeispiel bildet die Anschlussfläche 9, 14 eines Endrohrteils 7, 8 bzw. die entsprechende Ebene, in der die Anschlussfläche 9, 14 liegt, mit der zugeordneten Mittellängsachse 11, 16 dieses Endrohrteils 7, 8 einen Winkel α von 45°. In Fig. 2 ist erkennbar, dass auch die Drehachse 13, 17 mit der zugeordneten Mittellängsachse 11, 16 des Endrohrteils 7, 8 einen Winkel α von 45° bilden. - Vorzugsweise und im Ausführungsbeispiel bildet eine Komplementäranschlussfläche 10, 15 des Mittelrohrteils 6 mit der Mittellängsachse 12 des Mittelrohrteils 6 einen Winkel β von 45°. In der Fig. 2 ist weiterhin erkennbar, dass auch die Drehachse 13, 17 mit dieser Mittellängsachse 12 einen Winkel β von 45° bildet.

In Fig. 2 ist ein linearer bzw. geradliniger Zustand des erfindungsgemäßen Extruderanschlussrohrstückes 3 dargestellt, in dem die Mittellängsachsen 11, 16 der Endrohrteile 7, 8 und des Mittelrohrteils 6 parallel zueinander angeordnet sind. Außerdem liegen die Mittellängsachsen 11, 16 der beiden Endrohrteile 7, 8 auf einer Geraden. Vorzugsweise und im Ausführungsbeispiel gemäß Fig. 2 sind in dem linearen Zustand des Extruderanschlussrohrstückes 3 die beiden Anschlussflächen 9, 14 bzw. die ihnen zugeordneten Ebenen in entgegengesetzte Richtungen geneigt. Entsprechendes gilt natürlich auch für die Komplementäranschlussflächen 10, 15.

Fig. 3 zeigt zunächst einen ersten gewinkelten Zustand des Extruderanschlussrohrstückes 3, der durch Verdrehen des ersten Endrohrteils 7 gegenüber dem Mittelrohrteil 6 herstellbar ist und in dem die Mittellängsachse 11 des ersten Endrohrteils 7 senkrecht zur Mittellängsachse 12 des Mittelrohrteils 6 und zur Mittellängsachse 16 des zweiten Endrohrteils 8 angeordnet ist. Das zweite Endrohrteil 8 wurde zur Darstellung dieses ersten gewinkelten Zustandes strichpunktiert gezeichnet. Fig. 3 zeigt weiterhin einen weiteren gewinkelten Zustand des Extruderanschlussrohrstückes 3, der durch Verdrehen des zweiten Endrohrteils 8 gegenüber dem Mittelrohrteil 6 hergestellt werden kann und in dem die beiden Mittellängsachsen 11, 16 der Endrohrteile 7, 8 senkrecht zur Mittellängsachse 12 des Mittelrohrteils 6 angeordnet sind. Wie oben bereits dargelegt, können alle Zwischenzustände zwischen den in Fig. 2 und 3 dargestellten Funktionszuständen stufenlos und problemlos durch Verdrehen der Komponenten gegeneinander eingestellt werden.

Eine vergleichende Betrachtung der Fig. 2 bzw. 3 und der Fig. 4 zeigt, dass Anschlussflansch 19 und Komplementäranschlussflansch 21 mit Hilfe eines ringförmigen Fixierungselementes 22 zusammengehalten werden. Die beiden Flansche bzw. deren Anschlussflächen 9, 14 und Komplementäranschlussflächen 10, 15 werden gleichsam mittels Keilverschluss aneinander gedrückt.

## Patentansprüche

1. Anschlussrohrstück, insbesondere Extruderanschlussrohrstück zur Durchleitung einer Schmelze von einem Extruder (1) zu einer weiteren Anlagenkomponente,
wobei zumindest ein Mittelrohrteil (6) sowie ein an ein erstes Ende des Mittelrohrteils (6) angeschlossenes erstes Endrohrteil (7) und ein an dem gegenüberliegenden zweiten Ende des Mittelrohrteils (6) angeschlossenes zweites Endrohrteil (8) vorgesehen ist,
wobei das erste Endrohrteil (7) und das zweite Endrohrteil (8) jeweils mit einer Anschlussfläche (9, 14) an eine Komplementäranschlussfläche (10, 15) des Mittelrohrteils (6) angeschlossen ist, wobei die Anschlussflächen (9, 14) und die Komplementäranschlussflächen (10, 15) schräg zu den Längsachsen (11, 16) der Endrohrteile (7, 8) und zur Längsachse (12) des Mittelrohrteils (6) orientiert sind
und wobei jedes Endrohrteil (7, 8) und das Mittelrohrteil (6) um eine senkrecht zur jeweiligen Anschlussfläche (9, 14) und senkrecht zur jeweils zugeordneten Komplementäranschlussfläche (10, 15) angeordneten Drehachse (13, 17) gegeneinander verdrehbar sind.

2. Anschlussrohrstück nach Anspruch 1, wobei ein Endrohrteil (7, 8) zum Anschluss an einen Extruder (1) vorgesehen ist.

3. Anschlussrohrstück nach einem der Ansprüche 1 oder 2, wobei ein Endrohrteil (7, 8) an der Anschlussfläche (9, 14) einen kreisförmigen Innenquerschnitt aufweist und wobei das Mittelrohrteil (6) an der zugeordneten Komplementäranschlussfläche (10, 15) ebenfalls einen kreisförmigen Innenquerschnitt aufweist.

4. Anschlussrohrstück nach einem der Ansprüche 1 bis 3, wobei an einem Endrohrteil (7, 8) ein mit der Anschlussfläche (9, 14) ausgestattetes Anschlusselement (18) vorgesehen ist, welches Anschlusselement (18) einen zylinderförmigen Innenraum aufweist, wobei die Zylinderlängsachse senkrecht zu der Anschlussfläche (9, 14) orientiert ist.

5. Anschlussrohrstück nach einem der Ansprüche 1 bis 4, wobei an dem Mittelrohrteil (6) ein mit einer Komplementäranschlussfläche (10, 15) ausgestattetes Komplementäranschlusselement (20) vorgesehen ist, welches Komplementäranschlusselement (20) einen zylinderförmigen Innenraum aufweist, wobei die Zylinderlängsachse dieses Innenraumes senkrecht zu der Komplementäranschlussfläche (10, 15) orientiert ist.

6. Anschlussrohrstück nach einem der Ansprüche 1 bis 5, wobei eine Anschlussfläche (9, 14) eines Endrohrteils (7, 8) mit der Längsachse (11, 16) dieses Endrohrteils (7, 8) einen Winkel α von 10° bis 60°, vorzugsweise von 10° bis 55° bildet.

7. Anschlussrohrstück nach einem der Ansprüche 1 bis 6, wobei eine Komplementäranschlussfläche (10, 15) des Mittelrohrteils (6) mit der Längsachse (12) des Mittelrohrteils (6) einen Winkel β von 10° bis 60°, vorzugsweise von 10° bis 55° bildet.

8. Anschlussrohrstück nach einem der Ansprüche 1 bis 7, wobei ein linearer Zustand des Extruderanschlussrohrstückes (3) erzeugbar ist, in dem die Längsachsen (11, 12, 16) der Endrohrteile (7, 8) und des Mittelrohrteils (6) parallel zueinander angeordnet sind.

9. Anschlussrohrstück nach einem der Ansprüche 1 bis 6, wobei durch Verdrehen von Endrohrteilen (7, 8) bzw. Mittelrohrteil (6) ein gewinkelter Zustand des Extruderanschlussrohrstückes (3) herstellbar ist, in dem die Längsachsen (11, 16) der Endrohrteile (7, 8) parallel zueinander und senkrecht zur Längsachse (12) des Mittelrohrteils (6) angeordnet sind.
